# EUROPEAN PATENT APPLICATION

(11) **EP 4 790 778 A1**
(43) Date of publication of application: **12.08.2026**
(21) Application number: 25864621.5
(22) Date of filing: 15.10.2025
(51) Int. Cl.: H01M 10/04, B65H 19/10, B65H 20/16, H01M 50/105, H01M 50/202

(54) **ELECTRODE SPLICING DEVICE AND METHOD**

(30) Priority: 09.12.2024 KR 20240182004
(71) Applicant: LG ENERGY SOLUTION, LTD., Seoul 07335 (KR)
(72) Inventor: Hyun, Woo Bin, Daejeon 34122 (KR); Lee, Seo Jun, Daejeon 34122 (KR); Kim, Da Woon, Daejeon 34122 (KR)
(74) Representative: Plasseraud IP
(86) International application number: PCT/KR2025/016218
(87) International publication number: WO 2026/127320

(57) **Abstract**

According to exemplary embodiments of the present disclosure, an electrode splicing apparatus is provided. The electrode splicing apparatus includes: a first splicing unit capable of gripping a trailing end portion of a running electrode sheet; a second splicing unit disposed opposite to the first splicing unit and capable of gripping a leading end portion of a standby electrode sheet; and a line-contact type pressing unit for bonding the trailing end portion of the running electrode sheet and the leading end portion of the standby electrode sheet with a tape. The present disclosure also provides an electrode splicing method using such an electrode splicing apparatus.

## Description

### [Technical Field]

The present disclosure relates to the supply of battery electrodes, and more particularly, to an electrode splicing apparatus that improves the bonding strength of the joint portion between a running electrode sheet and a standby electrode sheet, and to an electrode splicing method using the same. This application claims the benefit of Korean Patent Application No. 10-2024-0182004, filed on December 9, 2024, the disclosure of which is incorporated herein by reference.

### [Background]

With the increasing technological development and demand for mobile devices, electric vehicles, and the like, the demand for secondary batteries as energy sources is rapidly increasing.

A secondary battery is a rechargeable battery capable of repeated charging and discharging, and basically consists of a battery case, electrodes, a separator, and an electrolyte. Electrodes for secondary batteries are manufactured through processing by unwinding an electrode sheet wound on a roll and conveying it at a constant speed. To this end, in an electrode production line, an electrode sheet is unwound and supplied through a splicing unit.

Generally, a splicing unit is necessary to continuously supply electrode sheets. Continuous supply is possible by mounting electrode rolls on electrode roll bobbins provided in each splicing unit and sequentially unwinding and supplying electrode sheets from the electrode rolls. For example, after supplying an electrode sheet from one electrode roll, when the electrode sheet is nearly depleted, the leading end of the electrode sheet from the other electrode roll is joined to the trailing end of the one electrode sheet to continue the supply.

Such joint connection between electrode sheets is performed through a cutting process for cutting the electrode sheet and a taping process.

However, conventionally, the joint connection of the electrode sheets between the two splicing units was not smooth. Conventionally, accidents occasionally occurred where breakage occurred in the initial tension rise section of the tape joint portion due to misalignment of the splicing tables of the two splicing units or a drop in the adsorption pressure of the intermediate adsorption plate.

### [Prior Art Document]

Korean patent application No. 10-2023-0168547 (publication date: 2023. 12. 14)

### [Disclosure]

### [Technical Problem]

In order to solve the problems of the prior art, the present disclosure aims to provide an electrode splicing apparatus that improves the bonding strength at the joint portion between electrode sheets.

Another object of the present disclosure is to provide an electrode splicing method using such an electrode splicing apparatus.

### [Technical Solution]

According to exemplary embodiments of the present disclosure for achieving the above-described objects, an electrode splicing apparatus is provided.

The electrode splicing apparatus includes: a first splicing unit capable of gripping a trailing end portion of a running electrode sheet; a second splicing unit disposed opposite to the first splicing unit and capable of gripping a leading end portion of a standby electrode sheet; and a line-contact type pressing unit for bonding the trailing end portion of the running electrode sheet and the leading end portion of the standby electrode sheet with a tape.

In the electrode splicing apparatus, the line-contact type pressing unit may move along a longitudinal direction of the second splicing unit to compress the tape.

In the electrode splicing apparatus, the line-contact type pressing unit includes: a tape pressing roller installed on one side of the second splicing unit; a roller holder supporting the tape pressing roller; an elevation cylinder for raising and lowering the roller holder; and a forward-backward cylinder for advancing the tape pressing roller to compress the tape.

In the electrode splicing apparatus, the first splicing unit includes: a first upper adsorption plate; a first lower adsorption plate forming a predetermined space with the first upper adsorption plate; a first intermediate adsorption plate capable of moving forward and backward to the predetermined space between the first upper adsorption plate and the first lower adsorption plate; and an electrode cutting blade capable of cutting the running electrode sheet.

In the electrode splicing apparatus, the second splicing unit includes: a second upper adsorption plate; a second lower adsorption plate forming a predetermined space with the second upper adsorption plate; a second intermediate adsorption plate capable of moving forward and backward to the predetermined space between the second upper adsorption plate and the second lower adsorption plate; a tape supply part providing tape to the second intermediate adsorption plate; and a shuttle part capable of reciprocating the line-contact type pressing unit along a longitudinal direction of the second splicing unit.

Meanwhile, according to exemplary embodiments of the present disclosure, an electrode splicing method using the electrode splicing apparatus is provided.

The electrode splicing method includes: cutting a lower end portion of a running electrode sheet; aligning a trailing end portion of the running electrode sheet formed by cutting the lower end portion with a leading end portion of a standby electrode sheet; supplying a tape to a joint portion of the aligned trailing end portion of the running electrode sheet and the leading end portion of the standby electrode sheet; temporarily attaching the tape by pressing the tape; and pressing the tape in a line-contact manner by rolling.

In the electrode splicing method, the cutting includes: advancing a first splicing unit toward a second splicing unit to adsorb the running electrode sheet by a first adsorption plate; and moving an electrode cutting blade along a width direction of the adsorbed running electrode sheet to cut the lower end portion of the running electrode sheet.

In the electrode splicing method, the alignment of the electrode sheet includes: preparing the standby electrode sheet by adsorbing a leading end portion of the standby electrode sheet by a second adsorption plate of a second splicing unit; and advancing the second splicing unit toward a first splicing unit to align the leading end portion of the standby electrode sheet with the trailing end portion of the running electrode sheet formed by cutting the lower end portion.

In the electrode splicing method, the tape supply includes: drawing out a tape from a tape supply part of a first splicing unit and adsorbing the tape to a second intermediate adsorption plate of a second splicing unit; and cutting the drawn-out tape while the tape is adsorbed.

In the electrode splicing method, the temporarily attaching of the tape includes: advancing the second intermediate adsorption plate on which the tape is adsorbed toward the first splicing unit to position the tape at the joint portion of the running electrode sheet and the standby electrode sheet; and attaching by pressing the tape with the second intermediate adsorption plate and subsequently retracting the second intermediate adsorption plate.

In the electrode splicing method, the pressing of the tape includes: lowering a tape pressing roller installed on one side of a second splicing unit; advancing the tape pressing roller to the temporarily attached tape; pressing the temporarily attached tape by reciprocating the tape pressing roller along a longitudinal direction of the second splicing unit; and returning the tape pressing roller to its original position by retracting and then raising it.

The electrode splicing method may further include: retracting a second splicing unit after the pressing of the tape; and retracting a first splicing unit.

### [Advantageous Effects]

The electrode splicing apparatus and method according to exemplary embodiments of the present disclosure can improve production efficiency by improving bonding strength at the joint portion between the running electrode sheet and the standby electrode sheet by a line-contact method through rolling, thereby preventing breakage of the electrode sheet in the initial tape tension rise section.

The effects that can be obtained from the exemplary embodiments of the present disclosure are not limited to the effects mentioned above, and other effects not mentioned can be clearly derived and understood by one having ordinary knowledge in the technical field to which the exemplary embodiments of the present disclosure belong from the following description. In other words, unintended effects of practicing the exemplary embodiments of the present disclosure can also be derived from the exemplary embodiments of the present disclosure by one having ordinary knowledge in the technical field.

### [Brief Description of the Drawings]

FIG. 1 is a schematic configuration of an electrode splicing apparatus according to an exemplary embodiment of the present disclosure, where FIG. 1a shows a state before splicing of a running electrode sheet and a standby electrode sheet, and FIG. 1b shows a state after splicing.
FIG. 2 is a perspective view of the second splicing unit of FIG. 1a.
FIG. 3 is a detailed view of the line-contact type pressing unit of FIG. 1a.
FIG. 4 is a detailed view of the line-contact type pressing unit and the tape supply part of FIG. 2.
FIG. 5 is a flowchart for explaining the electrode splicing method of the present disclosure.
FIG. 6 is a photograph showing decompression test results for the intermediate adsorption plate of the electrode splicing apparatus of the present disclosure.
FIG. 7 is a photograph showing decompression test results comparing before (a) and after (b) application of the tape pressing roller to the electrode splicing apparatus.

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

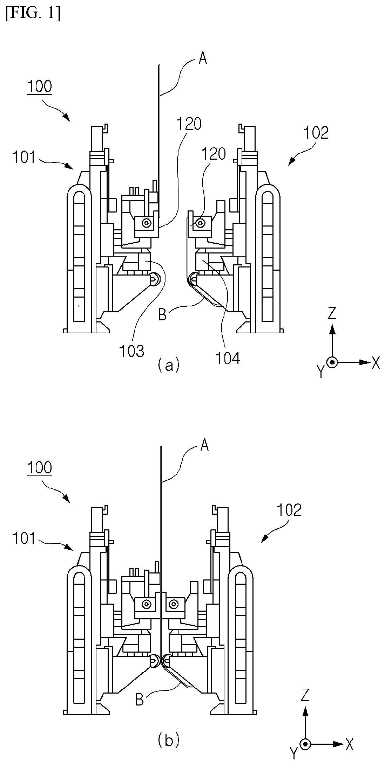

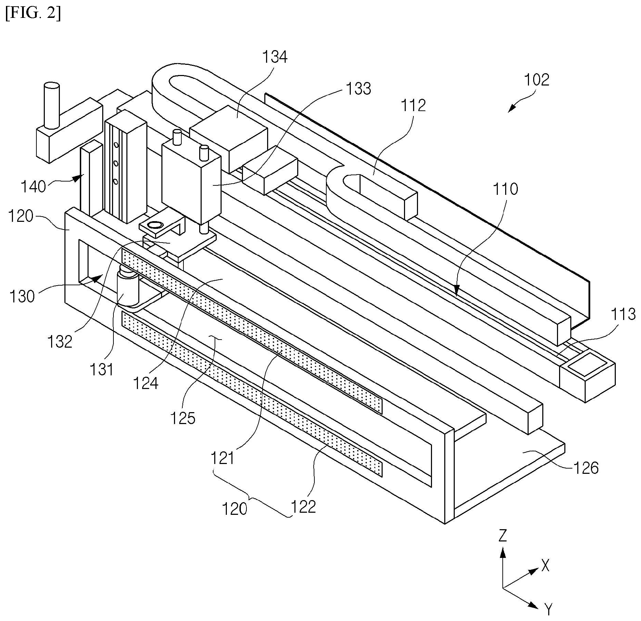

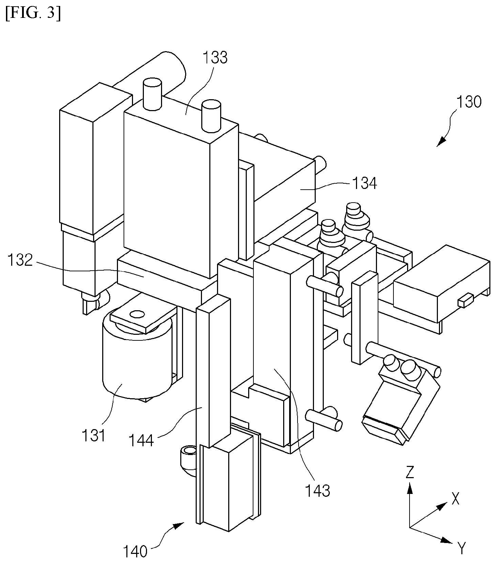

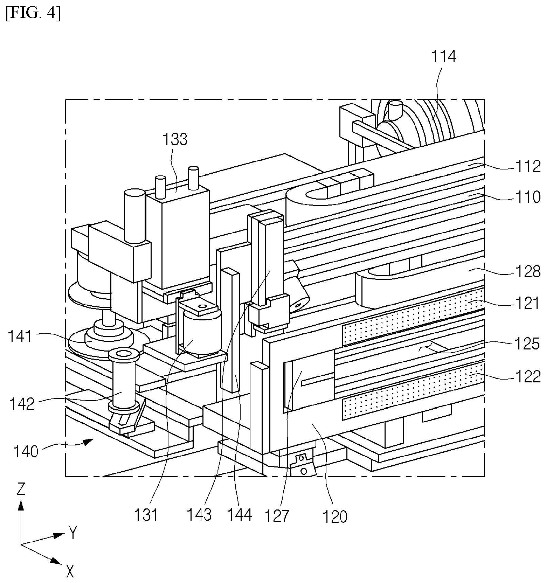

FIG. 1 is a schematic configuration of an electrode splicing apparatus 100 according to an exemplary embodiment of the present disclosure, where FIG. 1a shows a state before splicing of a running electrode sheet A and a standby electrode sheet B, and FIG. 1b shows a state after splicing. FIG. 2 is a perspective view of the second splicing unit 102 of FIG. 1a, FIG. 3 is a detailed view of the line-contact type pressing unit 130 of FIG. 1a, and FIG. 4 is a detailed view of the line-contact type pressing unit 130 and the tape supply part 140 of FIG. 2.

In the present specification, for convenience of explanation, the width direction of a pair of electrode splicing units 101, 102 in the drawing is defined as the X direction, the longitudinal direction of the splicing units 101, 102 is defined as the Y direction, and the height direction of the splicing units 101, 102 is defined as the Z direction.

As shown in FIGS. 1a and 1b, the electrode splicing apparatus 100 according to the present embodiment aligns the leading end portion of the standby electrode sheet B with the trailing end portion of the running electrode sheet A that has been cut, and temporarily attaches a tape. In the drawing, the running electrode sheet A is a roll electrode sheet that is nearly depleted while proceeding in the Z direction, and the standby electrode sheet B is a roll electrode sheet to be newly used. These electrode sheets A and B are initially mounted on electrode roll bobbins 114 respectively positioned at the rear of the pair of electrode splicing units 101, 102 (see FIG. 4).

Referring to FIGS. 1 to 4, the electrode splicing apparatus 100 according to an exemplary embodiment of the present disclosure includes a pair of electrode splicing units 101, 102 and a line-contact type pressing unit 130.

The pair of electrode splicing units 101, 102 can be divided into a first splicing unit 101 and a second splicing unit 102 for convenience. The first splicing unit 101 can advance or retract in the width direction (X direction) of the splicing unit 101 on the splicing table 103, and the second splicing unit 102 can advance or retract in the width direction (X direction) of the splicing unit 102 on the splicing table 104. Therefore, the first splicing unit 101 and the second splicing unit 102 can advance toward each other in the X direction to grip the running electrode sheet A, or retreat in the X direction respectively to advance the running electrode sheet A in the Z direction.

The first splicing unit 101 can grip the trailing end portion of the running electrode sheet A, and the second splicing unit 102 is disposed opposite to the first splicing unit 101 and can grip the leading end portion of the standby electrode sheet B. The first splicing unit 101 and the second splicing unit 102 may each have the same structure. Therefore, depending on the production line site, the standby electrode sheet B may be disposed to be gripped by the first splicing unit 101 and the running electrode sheet A may be disposed to be gripped by the second splicing unit 102.

Hereinafter, for convenience of explanation, on the premise that the first splicing unit 101 and the second splicing unit 102 have similar structures, description will be made focusing on the second splicing unit 102.

The second splicing unit 102 includes a second adsorption plate 120, a second intermediate adsorption plate 124, and a line-contact type pressing unit 130.

The second adsorption plate 120 includes a second upper adsorption plate 121 and a second lower adsorption plate 122, and may have a predetermined space 125 between the second upper adsorption plate 121 and the second lower adsorption plate 122. A plurality of suction holes are formed in the second upper adsorption plate 121, and a plurality of suction holes are also formed in the second lower adsorption plate 122. Accordingly, the second adsorption plate 120 can adsorb the standby electrode sheet B by creating a vacuum state in the plurality of suction holes.

The second intermediate adsorption plate 124 is positioned between the second upper adsorption plate 121 and the second lower adsorption plate 122, and can advance or retract to the space 125 between the two plates 121, 122. Although not shown, a plurality of suction holes are also formed in the second intermediate adsorption plate 124. The second adsorption plate 120 and the second intermediate adsorption plate 124 are installed on a fixing bracket 126 of the second splicing unit 102, and the unit itself can move in the X direction by sliding on a moving table at the lower part.

The line-contact type pressing unit 130 may include a tape pressing roller 131, a roller holder 132 supporting the tape pressing roller 131, an elevation cylinder 133 for raising or lowering the roller holder 132, and a forward-backward cylinder 134 for advancing or retracting the roller holder 132.

The tape pressing roller 131 may be installed on one side of the second splicing unit 102. The elevation cylinder 133 can raise and lower the roller holder 132 supporting the tape pressing roller 131 in the Z direction. In addition, the forward-backward cylinder 134 can advance and retract the roller holder 132 in the X direction. Accordingly, the tape pressing roller 131 can move in the Z direction by the elevation cylinder 133 and simultaneously move in the X direction by the forward-backward cylinder 134 to compress the tape.

The second splicing unit 102 includes a shuttle part 110 that enables the line-contact type pressing unit 130 to reciprocate in the longitudinal direction of the second splicing unit 102, that is, the Y direction. The shuttle part 110 includes a shuttle belt 112 mounted on the line-contact type pressing unit 130 and a shuttle rail 113 that guides the line-contact type pressing unit 130 to move along the Y direction.

Specifically, the forward-backward cylinder 134 of the line-contact type pressing unit 130 may be installed to be movable along the shuttle rail 113. Accordingly, the tape pressing roller 131 of the line-contact type pressing unit 130 can move in the X direction by the forward-backward cylinder 134 to press the tape, and then move along the longitudinal direction (Y direction) of the second splicing unit 102 to compress the tape.

In the second splicing unit 102, the tape supply part 140 is positioned on one side of the second splicing unit 102 and can provide tape to the second intermediate adsorption plate 124.

The tape supply part 140 may include a roll tape holder 141 for holding roll tape, a roll tension guide 142 for guiding the tape supplied from the roll tape holder 141 and applying tension, a tape cutting cylinder 143 for cutting the tape, and a tape gripper 144 for gripping and moving the cut tape in the Y direction.

In the tape supply part 140, the tape supplied from the roll tape holder 141 is pulled taut by the roll tension guide 142 while the tape is gripped by the tape gripper 144. In this state, the tape gripper 144 moves in the longitudinal direction of the second splicing unit 102, that is, the Y direction, and the second intermediate adsorption plate 124 advances in the X direction to adsorb the tape. Thereafter, the tape cutting cylinder 143 cuts the tape, and the tape gripper 144 and the tape cutting cylinder 143 return to their original positions.

In addition, the second splicing unit 102 may include an electrode cutting blade capable of cutting the standby electrode sheet B. The electrode cutting blade can move in the Y direction to the cutting guide block 127 by the electrode cutting blade transfer belt 128 to cut the standby electrode sheet B.

Meanwhile, like the second splicing unit 102, the first splicing unit 101 may include a first upper adsorption plate, a first lower adsorption plate forming a predetermined space with the first upper adsorption plate, and a first intermediate adsorption plate capable of moving forward and backward to the space between the first upper adsorption plate and the first lower adsorption plate. Since these plates are the same as those of the second splicing unit 102, redundant description is omitted here.

In addition, the first splicing unit 101 may have a tape supply part of the same structure as in the second splicing unit 102.

In addition, the first splicing unit 101 may be equipped with the same electrode cutting blade as in the second splicing unit 102 to cut the running electrode sheet A.

A method of splicing electrode sheets using such an electrode splicing apparatus 100 will be described in detail in the second embodiment to be described later.

### (Second embodiment)

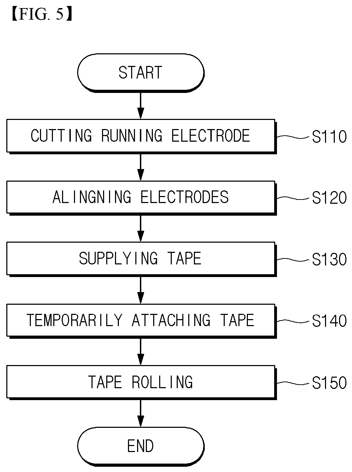

FIG. 5 is a flowchart for explaining the electrode splicing method of the present disclosure.

Referring to FIG. 5 together with FIGS. 1 to 4, the electrode splicing method according to the present disclosure includes cutting the lower end portion of the running electrode sheet A (S110), aligning the leading end portion of the standby electrode sheet B with the trailing end portion of the running electrode sheet A whose lower end portion has been cut (S120), supplying tape to the joint portion of the aligned trailing end portion of the running electrode sheet A and the leading end portion of the standby electrode sheet B (S130), temporarily attaching the tape by pressing the tape (S140), and pressing the tape by a line-contact method through rolling (S150).

In order to splice the standby electrode sheet B to the running electrode sheet A, it is necessary to cut the leading end portion of the standby electrode sheet B to some extent to leave a straight cutting line. Also, it is preferable to cut the lower end portion of the running electrode sheet A to leave a straight cutting line.

Specifically, in the running electrode cutting step (S110), the first splicing unit 101 advances in the X direction toward the second splicing unit 102, and the first adsorption plate of the first splicing unit 101 adsorbs and grips the running electrode sheet A. The first splicing unit 101 moves about half the distance between the two splicing units 101 and 102 to grip the running electrode sheet A.

In that state, the electrode cutting blade moves between the first upper adsorption plate and the first lower adsorption plate of the first adsorption plate 120 to cut the lower end portion of the running electrode sheet A. When the cutting process by the electrode cutting blade is completed, the cut lower end portion of the running electrode sheet A falls downward due to its own weight.

Next, in order to connect the running electrode sheet A and the standby electrode sheet B, the leading end portion of the standby electrode sheet B is adsorbed by the second adsorption plate 120 of the second splicing unit 102 to prepare the standby electrode sheet B, and the second splicing unit 102 is advanced in the X direction toward the first splicing unit 101 to align the leading end portion of the standby electrode sheet B with the trailing end portion of the running electrode sheet A whose lower end portion has been cut (S120). At this time, using a vision sensor or the like, the width-direction edge lines of the trailing end portion of the running electrode sheet A and the leading end portion of the standby electrode sheet B are aligned so as not to be misaligned.

Through the above process, when the trailing end portion of the running electrode sheet A and the leading end portion of the standby electrode sheet B are aligned, tape is drawn out from the tape supply part 140 and supplied to the second intermediate adsorption plate 124 (S130). The tape supplied to the second intermediate adsorption plate 124 is adsorbed, and in a state where the tape is adsorbed, the drawn-out tape is cut by the tape cutting cylinder 143.

Next, the second intermediate adsorption plate 124 on which the tape is adsorbed is advanced in the X direction toward the first splicing unit 101 to supply the tape to the joint portion of the running electrode sheet A and the standby electrode sheet B. Then, after attaching the tape by pressing with the second intermediate adsorption plate 124, the second intermediate adsorption plate 124 is retracted, so that the tape can be temporarily attached to the joint portion (S140).

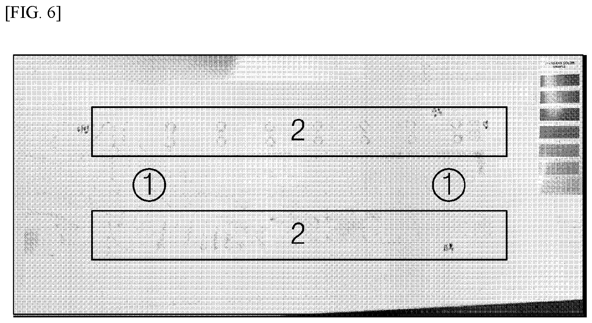

Referring to FIG. 6 for an observation regarding the temporary attachment state of the tape, the line-contact pressing effect by rolling according to the present embodiment can be clearly understood.

FIG. 6 shows decompression test results for the second intermediate adsorption plate 124 in the electrode splicing apparatus 100 of the present disclosure.

As can be seen from the color paper photograph shown in FIG. 6, in the existing electrode splicing apparatus, the second upper adsorption plate 121 and the second lower adsorption plate 122 (position ② in FIG. 6) show some decompression effect, but when the tape is temporarily attached only with the second intermediate adsorption plate 124, the second intermediate adsorption plate (position ① in FIG. 6) shows almost no decompression effect.

Therefore, in the electrode splicing apparatus 100 of the present disclosure, after the tape temporary attachment step (S140) by the second intermediate adsorption plate 124, line-contact pressing is performed to securely compress the tape.

In the line-contact type tape pressing step (S150) according to the present disclosure, the elevation cylinder 133 is lowered in the Z direction from one side of the second splicing unit 102 to lower the tape pressing roller 131, and the tape pressing roller 131 is moved in the X direction through the forward-backward cylinder 134 to advance the tape pressing roller 131 to the temporarily attached tape.

Then, the tape pressing roller 131 is reciprocated along the longitudinal direction of the second splicing unit 102, that is, the Y direction, to press the temporarily attached tape. The tape pressing roller 131 may press the tape while advancing in the Y direction and may further press the tape again while retracting. Thereafter, the tape pressing roller 131 is retracted and then raised to move to its original position.

After the attachment of the tape is completed in this way, the second adsorption plate 120 is moved and separated in the X direction, and finally, the first adsorption plate is retracted in the X direction, so that the running electrode sheet A can be continuously conveyed in the Z direction.

### (Third embodiment)

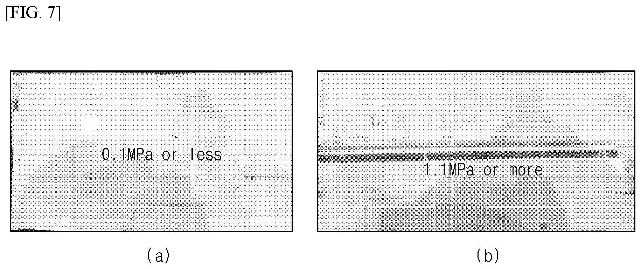

FIG. 7 is a photograph showing decompression test results comparing before (a) and after (b) application of the tape pressing roller 131 to the electrode splicing apparatus 100.

As shown in FIG. 7a, in the electrode splicing apparatus 100 where the tape pressing roller 131 is not installed, the adsorption state of the tape at the joint portion between the electrode sheets drops significantly to 0.1 MPa. On the other hand, as shown in FIG. 7b, in the electrode splicing apparatus 100 to which the tape pressing roller 131 is applied, it can be seen that the adsorption state of the tape at the joint portion between the electrode sheets is greatly improved to 1.1 MPa. That is, by applying the line-contact type pressing unit by rolling according to the present embodiment, the splicing of the running electrode sheet and the standby electrode sheet is ensured, so that breakage does not occur at the joint portion of the tape, thereby ensuring smooth operation of the production line.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. An electrode splicing apparatus comprising:
a first splicing unit capable of gripping a trailing end portion of a running electrode sheet;
a second splicing unit disposed opposite to the first splicing unit and capable of gripping a leading end portion of a standby electrode sheet; and
a line-contact type pressing unit for bonding the trailing end portion of the running electrode sheet and the leading end portion of the standby electrode sheet by means of a tape.

2. The electrode splicing apparatus of claim 1, wherein
the line-contact type pressing unit moves along a longitudinal direction of the second splicing unit to compress the tape.

3. The electrode splicing apparatus of claim 2, wherein
the line-contact type pressing unit comprises:
a tape pressing roller installed on one side of the second splicing unit;
a roller holder supporting the tape pressing roller;
an elevation cylinder for raising and lowering the roller holder; and
a forward-backward cylinder for advancing the tape pressing roller to compress the tape.

4. The electrode splicing apparatus of claim 1, wherein
the first splicing unit comprises:
a first upper adsorption plate;
a first lower adsorption plate forming a predetermined space with the first upper adsorption plate;
a first intermediate adsorption plate capable of moving forward and backward to the predetermined space between the first upper adsorption plate and the first lower adsorption plate; and
an electrode cutting blade capable of cutting the running electrode sheet.

5. The electrode splicing apparatus of claim 1, wherein
the second splicing unit comprises:
a second upper adsorption plate;
a second lower adsorption plate forming a predetermined space with the second upper adsorption plate;
a second intermediate adsorption plate capable of moving forward and backward to the predetermined space between the second upper adsorption plate and the second lower adsorption plate;
a tape supply part providing tape to the second intermediate adsorption plate; and
a shuttle part capable of reciprocating the line-contact type pressing unit along a longitudinal direction of the second splicing unit.

6. An electrode splicing method comprising:
cutting a lower end portion of a running electrode sheet;
aligning a trailing end portion of the running electrode sheet formed by cutting the lower end portion with a leading end portion of a standby electrode sheet;
supplying a tape to a joint portion of the aligned trailing end portion of the running electrode sheet and the leading end portion of the standby electrode sheet;
temporarily attaching the tape by pressing the tape; and
pressing the tape in a line-contact manner by rolling.

7. The electrode splicing method of claim 6, wherein
the cutting comprises:
advancing a first splicing unit toward a second splicing unit to adsorb the running electrode sheet by a first adsorption plate; and
moving an electrode cutting blade along a width direction of the adsorbed running electrode sheet to cut the lower end portion of the running electrode sheet.

8. The electrode splicing method of claim 6, wherein
the alignment of the electrode sheet comprises:
preparing the standby electrode sheet by adsorbing a leading end portion of the standby electrode sheet by a second adsorption plate of a second splicing unit; and
advancing the second splicing unit toward a first splicing unit to align the leading end portion of the standby electrode sheet with the trailing end portion of the running electrode sheet formed by cutting the lower end portion.

9. The electrode splicing method of claim 6, wherein
the tape supply comprises:
drawing out a tape from a tape supply part of a first splicing unit and adsorbing the tape to a second intermediate adsorption plate of a second splicing unit; and
cutting the drawn-out tape while the tape is adsorbed.

10. The electrode splicing method of claim 9, wherein
the temporarily attaching of the tape comprises:
advancing the second intermediate adsorption plate on which the tape is adsorbed toward the first splicing unit to position the tape at the joint portion of the running electrode sheet and the standby electrode sheet; and
attaching by pressing the tape with the second intermediate adsorption plate and subsequently retracting the second intermediate adsorption plate.

11. The electrode splicing method of claim 6, wherein
the pressing of the tape comprises:
lowering a tape pressing roller installed on one side of a second splicing unit;
advancing the tape pressing roller to the temporarily attached tape;
pressing the temporarily attached tape by reciprocating the tape pressing roller along a longitudinal direction of the second splicing unit; and
returning the tape pressing roller to its original position by retracting and then raising it.

12. The electrode splicing method of claim 6, further comprising:
retracting a second splicing unit after the pressing of the tape; and
retracting a first splicing unit.
